# EUROPEAN PATENT APPLICATION

(11) **EP 1 559 734 A1**
(43) Date of publication of application: **03.08.2005**
(21) Application number: 03770117.4
(22) Date of filing: 04.11.2003
(51) Int. Cl.: C08G 18/48, C08L 75/08, C08K 5/3492, C08K 5/521

(54) **COMPOSITION FOR FLAME-RETARDANT FLEXIBLE POLYURETHANE FOAM**

(30) Priority: 06.11.2002 JP 2002322851
(71) Applicant: DAIHACHI CHEMICAL INDUSTRY CO., LTD., Osaka-shi, Osaka 541-0046 (JP)
(72) Inventor: TOKUYASU, Noriaki, Tokai-shi, Aichi 477-0032 (JP); HAMADA, Toshiya, Handa-shi, Aichi 475-0833 (JP)
(74) Representative: Müller-Boré & Partner Patentanwälte
(86) International application number: PCT/JP2003/014046
(87) International publication number: WO 2004/041897

(57) **Abstract**

The present invention provides a composition for a flame-retardant flexible polyurethane foam comprising:(A) 100 parts by weight of a polyol component containing a polyether polyol having at least 2 hydroxyl groups and a number average molecular weight of 2,000 to 5,000; (B) 3 to 50 parts by weight of a melamine-based flame retardant having an average particle diameter of 30 to 60 µm; (C) 5 to 35 parts by weight of an additive-type phosphorus-containing flame retardant; (D) 0.01 to 2 parts by weight of a catalyst; (E) 0.1 to 10 parts by weight of a blowing agent; (F) 0.1 to 3 parts by weight of a silicone foam stabilizer; and (G) a polyisocyanate component in an amount corresponding to an isocyanate index of 90 to 120.

The composition of the present invention enables a highly flame-retardant polyurethane foam to be obtained even with the use of a general-purpose polyol.

## Description

### TECHNICAL FIELD

The present invention relates to a composition for a flame-retardant flexible polyurethane foam, and a flame-retardant flexible polyurethane foam produced therefrom.

### BACKGROUND ART

Polyurethane resins, which are typical thermosetting resins, are relatively inexpensive and easy to mold, and foamed products thereof are widely used across the entire range of products in daily use, including automotive parts. However, polyurethane resins are flammable, and burn uncontrollably when ignited. Therefore, in some fields of polyurethane resin usage, it is now legally mandated that polyurethane resin products be rendered flame retardant. Current standards concerning flame retardancy are, for instance, American standard FMVSS 302 for automotive interior parts, Japanese standard JIS A 1321 for building materials, American standard CAL 117 and British standard BS 5852 for furniture, etc.

Methods widely employed to meet the criteria prescribed by the above-mentioned standards include adding a phosphorus-containing organic flame retardant, or an inorganic flame retardant such as aluminum hydroxide and antimony trioxide, into a flexible polyurethane foam. However, use of a phosphorus-containing organic flame retardant results in the production of a large amount of molten drops during combustion of the polyurethane foam, thus making it difficult to fulfill the criteria defined in the flame retardancy standards. Inorganic flame retardants need to be used in large amounts in order to impart sufficient flame retardancy to the polyurethane foam, thus potentially leading to excessively increased viscosity of the raw material, as well as degraded mechanical properties of the foam.

With this being the case, use of a melamine-based flame retardant has been proposed as another measure to meet the standards. However, it is difficult to obtain a polyurethane foam with sufficient flame retardancy by using a melamine-based flame retardant alone, and, accordingly, it generally requires another flame retardant be used concurrently. As an example, the polyurethane foam disclosed in Japanese Unexamined Patent Publication No. 2001-200028 contains a melamine resin together with a phosphorus-containing organic flame retardant. However, this polyurethane foam contains the melamine resin in a large amount as an essential feature thereof, which results in a deterioration of the properties of the foam. In addition, when melamine resins are used in large amounts in polyurethane foams, the range of applicability of the foams is limited because melamine resins are expensive.

As another example, the method described in Japanese Unexamined Patent Publication No. 1990-202948 uses melamine as a flame retardant. This publication merely discloses, as a composition satisfying the criteria of BS 5852, one embodiment that comprises an expensive modified polyol having urea or styrene copolymerized or dispersed therein.

### DISCLOSURE OF THE INVENTION

A primary object of the present invention is to provide a novel compotision for a flame-retardant flexible polyurethane foam comprising a melamine-based flame retardant, the composition being capable of providing sufficient flame retardancy even when using a general-purpose polyol, without requiring the use of a special modified polyol.

The present inventors conducted extensive research to overcome the above-described drawbacks, and found that, by using a melamine-based flame retardant having a specific average particle diameter and an additive-type phosphorus-containing flame retardant together at a specific ratio, a highly flame-retardant molded product that satisfies the criteria of, for example, standard BS 5852, is obtained even though a general-purpose polyol is used. The inventors also found that use of a silicone foam stabilizer as a foam stabilizer further increases the flame retardancy of the molded product. The present invention was accomplished based on these findings.

The present invention therefore provides a composition for a polyurethane foam, and a polyurethane foam produced therefrom, which are defined below.
1. A composition for a flame-retardant flexible polyurethane foam comprising:
   (A) 100 parts by weight of a polyol component containing a polyether polyol having at least 2 hydroxyl groups and a number average molecular weight of 2,000 to 5,000;
   (B) 3 to 50 parts by weight of a melamine-based flame retardant having an average particle diameter of 30 to 60 µm;
   (C) 5 to 35 parts by weight of an additive-type phosphorus-containing flame retardant;
   (D) 0.01 to 2 parts by weight of a catalyst;
   (E) 0.1 to 10 parts by weight of a blowing agent;
   (F) 0.1 to 3 parts by weight of a silicone foam stabilizer; and
   (G) a polyisocyanate component in an amount corresponding to an isocyanate index of 90 to 120.
2. The composition according to item 1 above, wherein the polyol component contains the polyether polyol in an amount of 70% by weight or more, based on the total amount of the polyol component.
3. The composition according to item 1 above, wherein the melamine-based flame retardant is at least one selected from the group consisting of melamine, melamine sulfate, melamine polyphosphate, melamine cyanurate, melamine resins, and chlorinated melamines.
4. The composition according to item 1 above, wherein the silicone foam stabilizer has a surface tension of 20.5 to 22 mN/m at a temperature of 25°C and a silicon atom content not exceeding 4.7% by weight.
5. The composition according to item 1 above, wherein the additive-type phosphorus-containing flame retardant has a molecular weight of 350 to 600.
6. A flame-retardant flexible polyurethane foam produced from the composition according to item 1 above, the foam having a bulk density of 25 to 50 kg/m³.

### 1. Composition for polyurethane foam

Described below are the components of the composition for a flame-retardant flexible polyurethane foam according to the present invention.

### (A) Polyol component

It is necessary that the polyol component contain a polyether polyol with a number average molecular weight of about 2,000 to 5,000. Such a polyether polyol is usually called a general-purpose polyol, and is available at low cost. The composition of the present invention, despite using such a low cost general-purpose polyol, enables a highly flame-retardant molded product to be obtained by using a combination of a melamine-based flame retardant having a specific particle diameter and an additive-type phosphorus-containing flame retardant.

The polyether polyol to be used may be selected from those which have a number average molecular weight of about 2,000 to 5,000, preferably about 3,000 to 4,000; and which have 2 or more hydroxyl groups, preferably 2 to 4 hydroxyl groups. Examples of such polyether polyols include polyether polyols with a hydroxyl value of about 25 to 70 mg KOH/g that are obtained by random or block addition of alkylene oxides such as ethylene oxide and propylene oxide to polyfunctional polyols, amine compounds or the like. Examples of usable polyfunctional polyols include glycols such as ethylene glycol and propylene glycol; triols such as glycerol, trimethylolpropane and 1,2,6-hexanetriol; and polyols such as pentaerythritol, sorbitol and sucrose. Examples of usable amine compounds include ammonia, triethanolamine, ethylenediamine, diethylenetriamine, aminoethylpiperazine, aniline, diaminotoluene and diphenylmethane-4,4'-diamine.

Among these examples, particularly preferable are polyether polyols obtained by random or block addition of alkylene oxides such as ethylene oxide and propylene oxide to triols such as glycerol, trimethylolpropane and 1,2,6-hexanetriol.

These polyether polyols may be used either singly or in combination.

The polyol component of the composition according to the present invention, which essentially contains the above-described polyether polyol with a number average molecular weight of about 2,000 to 5,000, may further contain other polyol(s) selected from known polyols heretofore used in the production of flexible polyurethane foams, for example, polyester polyols and phenol-based polyols.

Polyester polyols are compounds with terminal hydroxyl groups which are obtained by polycondensation of polyfunctional carboxylic acids and polyfunctional hydroxyl compounds. Polyester polyols preferably used are those having a number average molecular weight of about 500 to 10,000, and more preferably those having a number average molecular weight of about 1,000 to 5,000. Examples of usable polyfunctional carboxylic acids include adipic acid, phthalic acid, succinic acid, azelaic acid and sebacic acid. Examples of usable polyfunctional hydroxyl compounds include glycols such as ethylene glycol, propylene glycol, butanediol and diethylene glycol; and polyhydric alcohols such as glycerol, trimethylol propane and pentaerythritol. Usable polyester polyols also include lactone-based polyester polyols obtained by ring-opening polymerization of cyclic esters such as ε-caprolactone.

Examples of phenol-based polyols include polyols obtained by reacting alkylene oxides with novolak resins or resole resins obtained from phenol and formaldehyde. Phenol-based polyols preferably used are those having a number average molecular weight of about 1,000 to 3,000, and more preferably those having a number average molecular weight of about 1,500 to 2,500.

These polyols, other than the aforementioned polyether polyol, may be used either singly or in combination, depending on the characteristics desired of the polyurethane foam to be produced.

It is preferable that the above-described polyether polyol, which has a number average molecular weight of about 2,000 to 5,000, be used in an amount of about 70% by weight or more, and more preferably about 80 % by weight or more, with respect to the total weight of the polyether polyol and other polyols used in combination as necessary therewith, i.e., the total weight of the polyol component.

### (B) Melamine-based flame-retardant with an average particle diameter of 30 to 60 µm

In the present invention, a melamine-based flame retardant with an average particle diameter of about 30 to 60 µm is used as a flame retardant.

Melamine-based flame retardants, while playing a minor role in directly causing foams to self-extinguish, have the property of absorbing heat as they decompose, thereby minimizing the ignition loss of foamed products. Accordingly, when a melamine-based flame retardant is used as a flame retardant, favorable results are obtained in the BS test that evaluates the loss on ignition.

The above melamine-based flame retardant having an average particle diameter of about 30 to 60 µm, when used in conjunction with an additive-type phosphorus-containing flame retardant described later, i.e., component (C), enables a foam with excellent flame retardancy to be obtained while maintaining other properties desired of the foam (such as elongation and tensile strength), even though a general-purpose polyether polyol is used as the polyol component. Using an average particle diameter exceeding 60 µm or less than 30 µm results in failing to provide sufficient flame retardancy to the resulting foam.

It is more preferable that the average particle diameter of the melamine-based flame retardant be about 40 to 50 µm.

As used herein, the average particle diameter of the melamine-based flame retardant is calculated as follows. The particles of the melamine-based flame retardant are separated using JIS Z8801-compliant standard fine mesh sieves (with nominal aperture sizes of 32 µm, 45 µm, 53 µm, 63 µm, 75 µm, 90 µm and 106 µm). Measurements of cumulative weight fraction (%) are taken for the particles which pass through the sieves, the results of which are then plotted on a graph of particle diameter distribution whose horizontal axis represents the particle diameter (µm), and whose vertical axis represents the cumulative weight fraction (%). The average particle diameter of the melamine-based flame retardant is defined as the particle diameter corresponding to a cumulative weight fraction of 50% in the above graph.

The melamine-based flame retardant to be used may be selected from those known as flame retardants, for example, melamine, melamine sulfate, melamine polyphosphate, melamine cyanurate, melamine resins, and chlorinated melamines. These melamine-based flame retardants may be used either singly or in combination. Melamine is particularly preferable for the purpose of the present invention.

The amount of the melamine-based flame retardant used is about 3 to 50 parts by weight, preferably about 5 to 40 parts by weight, and more preferably about 10 to 30 parts by weight, per 100 parts by weight of the polyol component. Using an excessively low amount of the flame retardant leads to poor flame retardancy of the resulting foam, while using an excessively high amount results in deteriorated mechanical properties of the foam.

### (C) Additive-type phosphorus-containing flame retardant

It is necessary that the composition for polyurethane foam of the present invention include an additive-type phosphorus-containing flame retardant. This particular flame retardant, when used in combination with the above-described melamine-based flame retardant having a specific particle diameter, i.e., component (B), enables a highly flame-retardant foam to be obtained even though the amount of the melamine-based flame retardant is not large.

Additive-type phosphorus-containing flame retardants refer to flame retardants of phosphorus-containing compounds having no reactive functional groups. Examples of such flame retardants include halogen-containing organic phosphorus compounds having no reactive functional groups, or oligomers derived therefrom; and non-halogenated organic phosphorus compounds having no reactive functional groups, or oligomers derived therefrom.

Examples of halogen-containing organic phosphorus compounds or oligomers derived therefrom include monomeric or oligomeric halogenated phosphate esters, monomeric or oligomeric halogenated phosphonate esters, etc. Specific examples include monomeric phosphate esters such as tris(chloroethyl) phosphate, tris(chloropropyl) phosphate, tris(dichloropropyl) phosphate, monobromoneopentyldi(chloropropyl) phosphate, di(monobromoneopentyl)chlorotepropyl phosphate, monobromoneopentyldi(chloroethyl) phosphate, di(monobromoneopentyl)chloroethyl phosphate, and Firemaster-LV-T23P [tradename, tris(2,3-dibromopropyl) phosphate, manufactured by Great Lakes Chemical Corporation]; oligomeric phophonate esters such as Antiblaze 78 (tradename, chlorinated polyphosphonate, manufactured by Albright & Wilson Limited); and oligomeric organic phosphorus compounds such as Thermolin 101 [tradename, tetrakis(2-chloroethyl)ethylene diphosphate, manufactured by Olin Corporation], Phosgard 2XC20 [tradename, tetrakis(2-chloroethyl)-2,2-bis(chloromethyl)propylene diphosphate, manufactured by Monsanto Company], CR-504L [tradename, halogen-containing oligomeric phosphate ester, manufactured by Daihachi Chemical Industry Co., Ltd.], CR-505 [tradename, halogen-containing oligomeric phosphate ester , manufactured by Daihachi Chemical Industry Co., Ltd.], CR-570 [tradename, halogen-containing oligomeric phosphate phosphonate ester, manufactured by Daihachi Chemical Industry Co., Ltd.], CR-509 [tradename, halogen-containing oligomeric phosphate phosphonate ester, manufactured by Daihachi Chemical Industry Co., Ltd.], and CR-530 [tradename, halogen-containing oligomeric phosphate phosphonate ester, manufactured by Daihachi Chemical Industry Co., Ltd.].

Specific examples of non-halogenated organic phosphorus compounds or oligomers derived therefrom include monomeric phosphate esters such as triphenyl phosphate, naphthyldiphenyl phosphate, dinaphthylphenyl phosphate, tricresyl phosphate, cresyldiphenyl phosphate, trixylenyl phosphate, tri(2-ethylhexyl) phosphate, diphenyl-2-ethylhexyl phosphate, trimethyl phosphate, triethyl phosphate, tributyl phosphate and tributoxyethyl phosphate; and oligomeric phosphate esters such as resorcinol bis(diphenylphosphate), bisphenol-A bis(diphenylphosphate), resorcinol bis(bis(2,6-dimethylphenyl)phosphate), hydroquinone bis(bis(2,6-dimethylphenyl)phosphate) and biphenol bis(bis(2,6-dimethylphenyl)phosphate).

The additive-type phosphorus-containing flame retardant for use in the present invention is preferably selected from the phosphate esters and phosphonate esters exemplified above, and more preferably from the phosphate esters exemplified above (additive-type phosphate ester flame-retardants).

More specifically, the additive-type phosphorus-containing flame retardant for use in the present invention is preferably selected from the above-exemplified compounds which have a molecular weight (a number average molecular weight in the case of oligomers) of about 350 to 600. When a flame retardant having a (number average) molecular weight of at least 350 is used, the heat-aging resistance of the resulting foam is improved, thereby preventing the flame retardancy of the foam from being reduced with the passage of time. Further, such a flame retardant is less likely to vaporize when the foam is heated. Use of a flame retardant having a (number average) molecular weight not more than 600 is unlikely to induce plasticization, thus making the resulting foam less prone to melting during combustion. As a result, highly satisfactory results can be obtained in a flame retardancy test that evaluates weight loss of the foam (BS test or CAL smoldering screening test). Further, the low likelihood of inducing plasticization ensures sufficient hardness of the resulting foam.

Specific examples of additive-type phosphorus-containing flame retardants with a molecular weight of about 350 to 600 include tris(dichloropropyl) phosphate, monobromoneopentyldi(chloropropyl) phosphate, di(monobromoneopentyl)chloropropyl phosphate, monobromoneopentyldi(chloroethyl) phosphate, di(monobromoneopentyl)chloroethyl phosphate, CR-530, CR-504L, CR-505, and CR-570.

The additive-type phosphorus-containing flame retardant is used in an amount of about 5 to 35 parts by weight, preferably about 8 to 30 parts by weight, and more preferably about 10 to 25 parts by weight, per 100 parts by weight of the polyol component. Using an excessively low amount leads to poor flame retardancy of the foam to be obtained, while an excessively high amount results in deteriorated mechanical properties of the foam.

### (D) Catalyst

The catalyst to be used may be selected without particular limitation from any known catalysts used in producing polyurethane foams, including, for example, amine catalysts and metal catalysts.

Examples of amine catalysts include additive-type amine catalysts such as triethylenediamine, tetramethylhexamethylenediamine, hexamethylethylenediamine, pentamethyldiethylenetriamine, N-methylmorpholine and DBU (1,8-diazabicyclo[5.4.0]undec-7-ene); and reactive-type amine catalysts, including amine compounds having at least one hydroxyl group per molecule such as diethanolamine, dimethylaminohexanol, dimethylaminoethoxyethanol and trimethylaminoethylethanolamine, and quaternary ammonium salts. It is particularly preferable that diethanolamine be used in combination with other amine catalyst(s).

Typical examples of metal catalysts include organometallic compounds containing a metal component such as tin, copper, lead, zinc, cobalt, nickel or potassium. Examples of usable metal catalysts include dibutyltin dilaurate, dibutyltin diacetate, zinc octoate, tin octoate, potassium octoate, potassium acetate, etc. Among these, tin catalysts such as dibutyltin dilaurate and tin octoate exhibit high catalytic activities.

The catalyst to be used may be selected from known catalysts, including the amine catalysts and metal catalysts exemplified above. These catalysts may be used either singly or in combination such that the total amount of all catalysts is about 0.01 to 2 parts by weight per 100 parts by weight of the polyol component.

More specifically, the amount of amine catalyst(s) used is about 0.01 to 1 part by weight, and preferably about 0.03 to 0.5 part by weight, per 100 parts by weight of the polyol component.

The amount of metal catalyst(s) used is about 0.01 to 1 part by weight, and preferably about 0.05 to 0.5 part by weight, per 100 parts by weight of the polyol component.

Combined use of an amine catalyst and a metal catalyst in the above-specified proportions allows the resinification reaction and foaming reaction to progress in a balanced manner.

### (E) Blowing agent

The blowing agent to be used in the composition for polyurethane foam of the present invention may be selected from known blowing agents heretofore used in compositions for flexible polyurethane foams, depending on the properties desired of the foam to be obtained.

Water is a typical example of such a blowing agent. Other examples include methylene chloride, n-butane, isobutane, n-pentane, isopentane, dimethyl ether, acetone, carbon dioxide, etc.

These blowing agents may be used either singly or in combination in accordance with methods known in the art, depending on the density or other properties desired for the resulting foam.

The amount of the blowing agent to be used is not particularly limited, and may be selected as necessary within the range of about 0.1 to 10 parts by weight, and preferably about 1 to 8 parts by weight, per 100 parts by weight of the polyol component.

### (F) Silicone foam stabilizer

In the composition of the present invention, a silicone foam stabilizer is used as a foam stabilizer. Use of a silicone foam stabilizer provides positive effects such as facilitating the mixing and emulsification of the starting materials and the dispersion of entrained gas, as well as stabilizing the cell films and preventing coalescence of bubbles, and, thus ultimately providing superior characteristics to the resulting foam.

Silicone foam stabilizers are generally block copolymers of dimethylsiloxane and a polyether, and may have various forms such as linear, branched, or pendant. Branched or pendant copolymers are used in many cases. The present invention, by using such a known silicone foam stabilizer, enables a foam to be obtained which has high flame retardancy as well as other excellent characteristics. Specifically, use of a silicone foam stabilizer in conjunction with the above-described melamine-based flame retardant and additive-type phosphorus-containing flame retardant contributes to the increased flame retardancy.

It is preferable that the silicone foam stabilizer be a low-activity silicone. Low-activity silicone refers to a silicone whose silicon atom content is reduced to decrease its activity. The surface tension of the low-activity silicone used is preferably about 20.5 to 22 mN/m, and more preferably about 20.9 to 21.7 mN/m, at a temperature of 25°C. The silicon atom content in the low-activity silicone is preferably not more than about 4.7% by weight, and more preferably not more than about 4.5% by weight. The lower limit for the silicon atom content is not particularly limited, but may be about 2% by weight.

Examples of usable low-activity silicones include compounds that satisfy the above-specified requirements for surface tension and silicon atom content, and that are represented by formula (1) below: 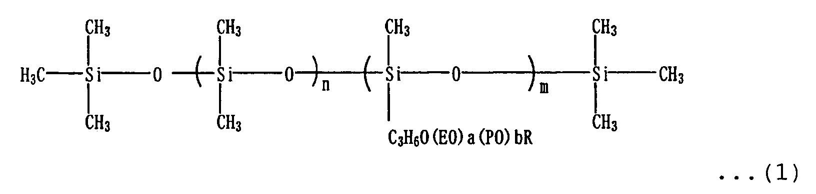 where m and n are each an integer of at least 1, the total of m and n is 20 to 150, and m/(m+n) is 1/20 to 1/5; a and b are each an integer of at least 1, the total of a and b is 20 to 60, and a/b is 2/3 to 3/2; and EO represents ethylene oxide, PO represents propylene oxide, and R represents a hydrogen atom, a C₁-C₄ alkyl group or R'CO-(with R' representing a hydrogen atom or a C₁-C₄ alkyl group).

In formula (1), m and n are each an integer of at least 1, with the total of m and n being about 20 to 150, and preferably about 20 to 130. And, m/(m+n) is about 1/20 to 1/5, and preferably about 1/20 to 1/6. a and b are each an integer of at least 1, with the total of a and b being about 20 to 60, and preferably about 20 to 50.

Also, in formula (1), R represents a hydrogen atom, an alkyl group having from about 1 to 4 carbon atoms or R'CO- (with R' representing a hydrogen atom or an alkyl group having from about 1 to 4 carbon atoms). Examples of alkyl groups having from about 1 to 4 carbon atoms include linear or branched alkyl groups having from about 1 to 4 carbon atoms, such as methyl, ethyl, n-propyl, isopropyl, n-butyl, isobutyl, sec-butyl and tert-butyl. Examples of groups represented by R'CO- include acyl groups having from about 1 to 4 carbon atoms, such as the formyl group and acetyl group.

In compounds represented by formula (1), the two repeating constitutional units in the main chain may have either a random or block structural relationship. In addition, the repeating constitutional units in the side chains, which are ethylene oxide (EO) and propylene oxide (PO), may also have either a random or block structural relationship.

The low-activity silicone used may be, for example, F-242T (tradename, manufactured by Shin-Etsu Chemical Co., Ltd.), L-5770 (tradename, manufactured by Crompton Corporation), L-620 (tradename, manufactured by Witco Corporation), etc.

The amount of silicone foam stabilizer to be used is about 0.1 to 3 parts by weight, and preferably about 0.5 to 2 parts by weight, per 100 parts by weight of the polyol component. An excessively small amount of silicone foam stabilizer provides no foam-stabilizing effect, thus failing to give desirable properties to the resulting foam. On the other hand, an excessively large amount of silicone foam stabilizer only increases the manufacturing cost, because there is a certain limit to the extent of foam-stabilizing effect that can be provided.

### (G) Polyisocyanate component

The polyisocyanate component to be used may be selected from polyisocyanate compounds with two or more isocyanate groups which have been heretofore used in compositions for polyurethane foams. Examples of such polyisocyanate compounds include aromatic polyisocyanates, aliphatic polyisocyanates and alicyclic polyisocyanates, as well as mixtures of two or more such polyisocyanates, and modified polyisocyanates obtained by modification of such polyisocyanates. Specific examples of such polyisocyanate compounds include polyisocyanates such as tolylene diisocyanate, diphenylmethane diisocyanate, polymethylene polyphenylene polyisocyanate (crude MDI), xylylene diisocyanate, isophorone diisocyanate and hexamethylene diisocyanate; and modified products of such polyisocyanates, such as carbodiimide modified products, biuret modified products, dimers and trimers. Prepolymers with terminal isocyanate groups obtained from such polyisocyanates and active hydrogen-containing compounds may also be used.

In the present invention, it is particularly preferable that tolylene diisocyanates including isomers such as 2,4-tolylene diisocyanate and 2,6-tolylene diisocyanate be used either singly or in combination.

The polyisocyanate component is used in an amount corresponding to an isocyanate index of about 90 to 120, preferably about 95 to 115, and more preferably about 100 to 110.

As used herein, the isocyanate index is defined as the percentage of the number of moles of isocyanate groups contained in the polyisocyanate component, to the number of moles of active hydrogen groups contained in the active hydrogen-containing compounds such as polyol components and water.

### Other components

If required, the composition for polyurethane foam of the present invention may further contain additives such as, for example, flame retardants other than the aforementioned melamine-based flame retardant and additive-type phosphorus-containing flame retardant, antioxidants, viscosity decreasers, fillers, anti-static agents, UV absorbents, lubricants, colorants, crosslinkers, hydrolysis inhibitors, etc., insofar as they do not impair the characteristics of the foam to be obtained. The type and amount of such additives are not particularly limited. Known additives can be used in generally employed ranges.

Flame retardants that may be used in addition to the aforementioned melamine-based flame retardant and additive-type phosphorus-containing flame retardant are, for example, nitrogen-containing compounds such as benzoguanamine, urea, ammonium polyphosphate and ammonium pyrophosphate; and metallic compounds such as aluminum hydroxide, magnesium hydroxide and zinc borate. These flame retardants may be added in such an amount that they do not impair the foaming properties of the composition for polyurethane foam, usually in an amount of not more than 5 parts by weight per 100 parts by weight of the polyol component.

It is also possible to use, as additional flame retardants, phosphate esters having reactive functional groups, i.e., reactive-type phosphate ester flame retardants, in addition to the above melamine-based flame retardant and additive-type phosphorus-containing flame retardant. Examples of such phosphate esters include monomeric phosphate esters such as diphenyl hydroquinone phosphate, diphenyl bisphenol-A phosphate, dixylyl hydroquinone phosphate, dixylyl bisphenol-A phosphate, pentaerythritol phosphate, D-600 (tradename, manufactured by Daihachi Chemical Industry Co., Ltd.), Exolit OP-550 (tradename, Clariant Corporation), Fyrol-PNX (tradename, manufactured by Akzo Nobel Chemicals Co., Ltd.), etc.

When reactive-type phosphate ester flame retardants are used, the amount is preferably about 15 parts by weight or less, and more preferably about 0.01 to 10 parts by weight, per 100 parts by weight of the polyol component.

Examples of usable antioxidants include trivalent phosphorus compounds such as triphenyl phosphite, tris(nonylphenyl) phosphite, diphenylisodecyl phosphite, bis(2,4-di-tert-butylphenyl)pentaerythritol disphosphite and tetrakis(2,4-di-tert-butylphenyl)-4,4-diphenylene phosphonite; and hydroquinone compounds such as hydroquinone, 2,5-di-tert-butylhydroquinone, octylhydroquinone and 2,5-di-tert-amylhydroquinone.

Examples of usable viscosity decreasers include phthalic acid esters, dibasic fatty acid esters, trimellitic acid esters, glycerol esters, etc.

Examples of usable fillers include inorganic fillers such as mica, talc and alumina fillers.

Examples of usable anti-static agents include cationic surfactants, nonionic surfactants, etc.

Examples of usable UV absorbents include benzophenone compounds, salicylate compounds, benzotriazole compounds, etc.

Examples of usable lubricants include fatty acid compounds, aliphatic amide compounds, ester compounds, alcohol compounds, etc.

### 2. Method for producing the foam

A polyurethane foam can be produced from the composition for polyurethane foam of the present invention by methods usually employed in the art. For example, a polyurethane foam can be produced by a one-shot method in which the polyol component, flame retardant, catalyst, blowing agent, foam stabilizer and the like are mixed at one time with the polyisocyanate component to cause reaction and foaming, or by a prepolymer method in which a portion of the polyol component is reacted with all the polyisocyanate component beforehand, and the resulting prepolymer is then mixed with the other components to cause reaction. In both of these methods, the catalyst is usually pre-mixed with the polyol component for use in the form of a homogenous solution or dispersion. The obtained foam may be cured at a temperature of about 40 to 120°C as necessary.

### 3. Polyurethane foam

According to the composition for flame-retardant flexible polyurethane foam of the present invention, a flexible polyurethane foam with superior flame retardancy can be obtained. This polyurethane foam, even though having a low density (e.g., about 25 kg/m³), exhibits sufficiently high flame retardancy that complies with standards for flame retardancy, for example, British standard BS 5852. The bulk density of this foam is about 25 to 50 kg/m³, and preferably 25 to 35 kg/m³.

As has been described above, according to the present invention, although a general-purpose polyether polyol is used as a polyol component, a polyurethane foam with excellent flame retardancy is obtained by using a combination of a melamine-based flame retardancy having a specific average particle diameter and an additive-type phosphorus-containing flame retardant. The flame retardancy of this polyurethane foam can be increased even more by using a silicone foam stabilizer as a foam stabilizer. The foam of the present invention, despite using a general-purpose polyether polyol, exhibits excellent flame retardancy that satisfies, for example, the stringent criteria of BS 5852.

### BEST MODES FOR CARRYING OUT THE INVENTION

The present invention will be described in further detail with reference to the following Examples, Comparative Examples and Experiment Examples to which, however, the invention is not limited. In the following examples, percentages and parts are all by weight unless otherwise indicated.

### Examples 1 to 4 and Comparative Examples 1 to 8

Flexible polyurethane foams were produced by the following one-shot method using the compositions having the formulations shown in Tables 1 to 3.

All of the components other than the polyisocyanate component were blended in the predetermined proportions, and were uniformly kneaded by stirring for 1 minute at 3,000 rpm in a stirrer. Thereafter, the polyisocyanate component was added, and the mixture was stirred for another 5 to 7 seconds at 3,000 rpm. The resulting mixture was then quickly poured into a cardboard box having a square cross section. Foaming took place immediately, and, after a few minutes, the maximum volume was reached. Subsequently, the foamed product was cured for 15 minutes at 80°C in a furnace. The foam thus obtained was a white, flexible polyurethane foam having bubble-like cells.

The notations used in Tables 1 to 3 refer to the components described below.

### 1. Polyol component

- MN-3050:: Trifunctional propylene-based polyether polyol (number average molecular weight: 3,000; hydroxyl value: 56.0 mg KOH/g, tradename "MN-3050 ONE", manufactured by Mitsui Takeda Chemicals Inc.)

### 2. Melamine-based flame retardant

- Melamine A:: Melamine with an average particle diameter of 45 µm (manufactured by Nissan Chemical Industries, Ltd.)
- Melamine B:: Melamine with an average particle diameter of 12 µm (manufactured by Mitsubishi Chemical Corporation)
- Melamine C:: Melamine with an average particle diameter of 85 µm

### 3. Additive-type phosphorus-containing flame retardant

- 1) D-660:: A mixture of phosphate esters including halogen-containing oligomeric phosphate esters (trade name "Daiguard-660", manufactured by Daihachi Chemical Industry Co., Ltd.)
- 2) D-520:: A mixture of phosphate esters including halogen-containing oligomeric phosphate esters (trade name "Daiguard-520", manufactured by Daihachi Chemical Industry Co., Ltd.)

### 4. Catalyst

- 1) DABCO 33LV:: A dipropylene glycol solution of triethylenediamine used as an amine catalyst (tradename "DABCO 33LV", manufactured by Sankyo Air Products Co., Ltd.)
- 2) A-1:: A 70% propylene glycol solution of bis-(2-dimethylaminoethyl) ether used as an amine catalyst (tradename "A-1", manufactured by Crompton Corporation).
- 3): Diethanolamine
- 4) T-9:: Tin octoate (tradename "T-9", manufactured by Sankyo Air Products Co., Ltd.)

### 5. Blowing agent: Water

### 6. Silicone foam stabilizer

L-620 (trade name "L-620", manufactured by Witco Corporation, with a surface tension of 21.1 mN/m and a silicon atom content of 4.0% by weight)

### 7. Polyisocyanate component

- Cosmonate T-80:: tolylene diisocyanate (an 80:20 mixture of 2,4- and 2,6-isomers, trade name "Cosmonate T-80", manufactured by Mitsui Takeda Chemicals, Inc.)

In the above method, the rise time (i.e., the length of time taken for the foaming to stop, expressed in seconds) was measured. Specimens were cut out from the polyurethane foams obtained by the above method, and their properties were determined in accordance with the test methods described below. The results, as well as the components of the compositions used for obtaining the polyurethane foams and their proportions, are shown in Tables 1 to 3.

### 1. Density (kg/cm³)

The density was measured in accordance with JIS K-7222.

### 2. Air permeability (ml/cm²/sec)

The air permeability was measured in accordance with JIS L-1004.

### 3. Combustion test

### 1) BS test

Measurements were performed in accordance with British Standard BS 5852.
· Specimens: 450 mm × 450 mm × 75 mm (2 specimens)
   450 mm × 300 mm × 75 mm (2 specimens)
· Number of test repetitions: n = 2
· Test method:
   Place the foam (specimen) wrapped in a flame-retardant cloth on a chair-shaped frame, and place thereon a wooden frame with a cotton cloth. Dampen the cotton cloth with 1.4 ml of propan-2-ol, and set it alight. After leaving it for 10 minutes, evaluate the ignition loss and self-extinguishability.
· Pass criteria:
   Ignition loss: not more than 60 g
   Flaming time: not longer than 10 minutes

### 2) CAL test (a) (vertical burning test)

Measurements were performed in accordance with California Technical Bulletin (furniture flammability standard) CAL 117.
CAL 117 Section A, Part I (vertical burning test)
· Specimen size: 305 mm × 75 mm × 13 mm
· Aging process: 104°C × 24 h
· Number of specimens:
   5 specimens for room temperature treatment and
   5 specimens for aging process treatment;
   total 10 specimens.
· Flame height: 3.8 mm
· Test method: Suspend the specimen vertically, and expose it to flames of a burner for 12 seconds. Remove the burner, and measure the afterflame (including the afterflame of the molten drops of the specimen) and the char length. Take measurements for 5 room temperature-treated specimens and 5 aging process-treated specimens, and average them.
· Pass criteria:
   Maximum char length: not more than 196 mm
   Average char length: not more than 147 mm
   Maximum afterflame: not more than 10 seconds
   Average afterflame: not more than 5 seconds

### 3) CAL test (b) (smoldering screening test)

Measurements were performed in accordance with California Technical Bulletin (furniture flammability standard) CAL No. 117.
CAL 117 Section D, Part II
· Specimens: 203 mm × 184 mm × 51 mm
   203 mm × 102 mm × 51 mm
· Number of test repetitions: n = 3
· Test method
   Place the specimen on a chair-shaped wooden frame together with a cloth. Place a lighted cigarette in the middle of the specimen and then cover it with another cloth. After the combustion ceases, calculate the percentage of non-smoldered residue of the specimen.
· Pass criteria:
   Test three specimens. The foam passes the criteria when the non-smoldered residue of all specimens is 80% or greater.

**Table 1**

| | | Ex. 1 | Comp. Ex. 1 | Comp. Ex. 2 |
|---|---|---|---|---|
| Formulation (all parts by weight) | Polyol Component: MN-3050 | 100 | 100 | 100 |
| | Melamine A (average particle diameter of 45 µm) | 25 | - | - |
| | Melamine B (average particle diameter of 12 µm) | - | 25 | - |
| | Melamine C (average particle diameter of 85 µm) | - | - | 25 |
| | Additive-type phosphorus-containing flame retardant: D-660 | 20 | 20 | 20 |
| | Catalyst: DABCO 33LV | 0.08 | 0.08 | 0.08 |
| | A-1 | 0.04 | 0.04 | 0.04 |
| | Diethanolamine | 0.04 | 0.04 | 0.04 |
| | T-9 | 0.24 | 0.24 | 0.24 |
| | Blowing agent: Water | 4.6 | 4.6 | 4.6 |
| | Silicone foam stabilizer: L-620 | 0.9 | 0.9 | 0.9 |
| | Polyisocyanate component: Cosmonate T-80 | 56.2 | 56.2 | 56.2 |
| Properties | Rise time (sec) | 85 | 86 | 88 |
| | Density (kg/cm³) | 28.6 | 29.0 | 28.8 |
| | Air permeability (ml/cm²/sec) | 120 | 149 | 155 |
| | BS test: Ignition loss (g) | 35.0 | Burnt out | Burnt out |
| | Flaming time (sec) | 195 | 206 | 210 |
| | Passed/Failed | Passed | Failed | Failed |
| Remarks: The composition of each of Example 1 and Comparative Examples 1 and 2 had an isocyanate index of 105. | | | | |

As is clear from Table 1 above, the composition of Example 1, comprising as flame retardants melamine with an average particle diameter of 45 µm and an additive-type phosphorus-containing flame retardant, produced a highly flame-retardant foam that satisfies both of the requirements specified by the BS test, i.e., the criteria for ignition loss and flaming time.

**Table 2**

| | | Ex. 2 | Comp. Ex. 3 | Comp. Ex. 4 |
|---|---|---|---|---|
| Formulation (all parts by weight) | Polyol Component: MN-3050 | 100 | 100 | 100 |
| | Melamine A (average particle diameter of 45 µm) | 10 | - | - |
| | Melamine B (average particle diameter of 12 µm) | - | 10 | - |
| | Melamine C (average particle diameter of 85 µm) | - | - | 10 |
| | Additive-type phosphorus-containing flame retardant: D-520 | 14 | 14 | 14 |
| | Catalyst: DABCO 33LV | 0.08 | 0.08 | 0.08 |
| | A-1 | 0.08 | 0.08 | 0.08 |
| | T-9 | 0.30 | 0.30 | 0.30 |
| | Blowing agent: Water | 3.9 | 3.9 | 3.9 |
| | Silicone foam stabilizer: L-620 | 1.2 | 1.2 | 1.2 |
| | Polyisocyanate component: Cosmonate T-80 | 49.0 | 49.0 | 49.0 |
| Properties | Rise time (sec) | 84 | 83 | 81 |
| | Density (kg/cm³) | 27.5 | 27.6 | 27.6 |
| | Air permeability (ml/cm²/sec) | 120.0 | 125.0 | 130.0 |
| | CAL test (a) | | | |
| | (vertical burning test) | | | |
| | Average char length (mm) | 78.2 | 87.6 | 99.3 |
| | Average afterflame (sec) | 0.0 | 0.6 | 0.4 |
| | Maximum char length (mm) | 89.0 | 112.0 | 117.4 |
| | Maximum afterflame (sec) | 0.0 | 1.0 | 1.0 |
| Remarks: The composition of each of Example 2 and Comparative Examples 3 and 4 had an isocyanate index of 105. | | | | |

As is clear from Table 2 above, the composition of Example 2, comprising as flame retardants melamine with an average particle diameter of 45 µm and an additive-type phosphorus-containing flame retardant, produced a highly flame-retardant foam that satisfies the requirements specified by CAL test (a) (vertical burning test), i.e., the criteria for average char length, average afterflame, maximum char length and maximum afterflame.

**Table 3**

| | | Ex. | | Comp. Ex. | | | |
|---|---|---|---|---|---|---|---|
| | | 3 | 4 | 5 | 6 | 7 | 8 |
| Formulation (all parts by weight) | Polyol Component: MN-3050 | 100 | 100 | 100 | 100 | 100 | 100 |
| | Melamine A (average particle diameter of 45 µm) | 5 | 10 | - | - | - | - |
| | Melamine B (average particle diameter of 12 µm) | - | - | 5 | 10 | - | - |
| | Melamine C (average particle diameter of 85 µm) | - | - | - | - | 5 | 10 |
| | Additive-type phosphorus-containing flame retardant: D-520 | 14 | 14 | 14 | 14 | 14 | 14 |
| | Catalyst: DABCO 33LV | 0.08 | 0.08 | 0.08 | 0.08 | 0.08 | 0.08 |
| | A-1 | 0.08 | 0.08 | 0.08 | 0.08 | 0.08 | 0.08 |
| | T-9 | 0.30 | 0.30 | 0.30 | 0.30 | 0.30 | 0.30 |
| | Blowing agent: Water | 3.9 | 3.9 | 3.9 | 3.9 | 3.9 | 3.9 |
| | Silicone foam stabilizer: L-620 | 1.2 | 1.2 | 1.2 | 1.2 | 1.2 | 1.2 |
| | Polyisocyanate component: Cosmonate T-80 | 49.0 | 49.0 | 49.0 | 49.0 | 49.0 | 49.0 |
| Properties | Rise time (sec) | 83 | 92 | 89 | 93 | 86 | 94 |
| | Density (kg/cm³) | 27.6 | 28.7 | 27.7 | 28.8 | 27.8 | 28.6 |
| | Air permeability (ml/cm²/sec) | 110 | 110 | 116 | 92 | 109 | 112 |
| | CAL test (b) (smoldering screening test) | | | | | | |
| | Non-smoldered residue (%) | 86.9 | 96.9 | 77.2 | 79.6 | 75.6 | 79.1 |
| | Passed/Failed | Passed | Passed | Failed | Failed | Failed | Failed |
| Remarks: The composition of each of Examples 3 and 4 and Comparative Examples 5 to 8 had an isocyanate index of 105. | | | | | | | |

As is clear from Table 3 above, the composition of both of Examples 3 and 4, comprising as flame retardants melamine with an average particle diameter of 45 µm and an additive-type phosphorus-containing flame retardant, produced a highly flame-retardant foam that satisfies the requirements specified by CAL test (b) (smoldering screening test), i.e., the criteria for percentage of non-smoldered residue.

## Claims

1. A composition for a flame-retardant flexible polyurethane foam comprising:
(A) 100 parts by weight of a polyol component containing a polyether polyol having at least 2 hydroxyl groups and a number average molecular weight of 2,000 to 5,000;
(B) 3 to 50 parts by weight of a melamine-based flame retardant having an average particle diameter of 30 to 60 µm;
(C) 5 to 35 parts by weight of an additive-type phosphorus-containing flame retardant;
(D) 0.01 to 2 parts by weight of a catalyst;
(E) 0.1 to 10 parts by weight of a blowing agent;
(F) 0.1 to 3 parts by weight of a silicone foam stabilizer; and
(G) a polyisocyanate component in an amount corresponding to an isocyanate index of 90 to 120.

2. The composition according to claim 1, wherein the polyol component contains the polyether polyol in an amount of 70% by weight or more, based on the total amount of the polyol component.

3. The composition according to claim 1, wherein the melamine-based flame retardant is at least one selected from the group consisting of melamine, melamine sulfate, melamine polyphosphate, melamine cyanurate, melamine resins, and chlorinated melamines.

4. The composition according to claim 1, wherein the silicone foam stabilizer has a surface tension of 20.5 to 22 mN/m at a temperature of 25°C and a silicon atom content not exceeding 4.7% by weight.

5. The composition according to claim 1, wherein the additive-type phosphorus-containing flame retardant has a molecular weight of 350 to 600.

6. A flame-retardant flexible polyurethane foam produced from the composition according to claim 1, the foam having a bulk density of 25 to 50 kg/m³.
